# EUROPEAN PATENT APPLICATION

(11) **EP 4 815 046 A1**
(43) Date of publication of application: **30.09.2026**
(21) Application number: 25841587.6
(22) Date of filing: 18.07.2025
(51) Int. Cl.: H01M 4/13, H01M 4/62, H01M 4/139, H01M 4/04, H01M 10/42, B05D 1/36, B05D 5/00, H01M 4/02

(54) **NEGATIVE ELECTRODE AND METHOD FOR MANUFACTURING NEGATIVE ELECTRODE**

(30) Priority: 19.07.2024 KR 20240095934
(71) Applicant: LG Energy Solution, Ltd., Seoul 07335 (KR)
(72) Inventor: CHOI, Min Hyuck, Daejeon 34122 (KR); KIM, Guk Tae, Daejeon 34122 (KR); KIM, Min Cheol, Daejeon 34122 (KR); PARK, Min Gu, Daejeon 34122 (KR); KIM, Sang Min, Daejeon 34122 (KR); MOON, Young Gyu, Daejeon 34122 (KR)
(74) Representative: Plasseraud IP
(86) International application number: PCT/KR2025/010630
(87) International publication number: WO 2026/019296

(57) **Abstract**

The present invention provides a negative electrode and a method for manufacturing a negative electrode, capable of ensuring both excellent productivity and long-term reliability by simultaneously preventing manufacturing process defects, and mechanical property deterioration of a final electrode through a negative electrode dam produced from a negative electrode dam composition comprising inorganic particles, a cellulose-based compound, a rubber-based binder, and a specific additive in optimal contents.

## Description

### Technical Field

The present invention relates to a negative electrode and a method for manufacturing a negative electrode.

This application claims the benefit of priority based on Korean Patent Application No. 10-2024-0095934 dated July 19, 2024, and Korean Patent Application No. 10-2025-0097289 dated July 18, 2025, all the disclosures of which are incorporated herein by reference.

### Background Art

For reduction of dependence on fossil fuels and reduction of carbon emissions, demand for repeatedly usable secondary batteries for a long time through recharge rapidly increases. Particularly, lithium secondary batteries with superior energy densities and lifespans are used as a key energy source in various fields, and related technology development is actively underway.

Lithium secondary battery electrodes are typically formed by applying a slurry to a current collector and drying it, where in this process, a 'sliding phenomenon' occurs, in which edge portions become thinner due to fluidity of the slurry.

In the case of a positive electrode, some techniques, in which an insulating layer is formed at edges of an active material layer to prevent the slurry from spreading, have been applied thereto. However, in the case of a negative electrode without any separate insulating layer, different approaches have been required, and accordingly, a technique of forming a novel supporting structure of a 'negative electrode dam' at the edges of the active material layer has been introduced. However, this has caused other technical challenges.

The formation of the negative electrode dam is a very difficult task in which interactions with the negative electrode active material layer and processability as well as physical properties to prevent the slurry from spreading should be considered. Conventional arts have limitations that cannot satisfy such complex requirements simultaneously.

For example, there was a clear trade-off relationship that if some properties of the dam composition were strengthened, other problems occurred. Attempts to increase support force of the dam reduced the tensile strength of the negative electrode active material layer, thereby leading to electrode detachment, and attempts to improve processability resulted in fat-edge defects due to solution agglomerating or excessive resinification. Conversely, focusing solely on maintaining the physical shape continued to accompany the problem of failing to adequately suppress the sliding phenomenon.

Consequently, there is a very high technical demand for a comprehensively optimized negative electrode dam composition capable of overcoming these trade-off relationships and simultaneously ensuring excellent productivity, and mechanical reliability of the final electrode.

### Disclosure

### Technical Problem

It is a problem to be solved by the present invention to provide a negative electrode and a method for manufacturing a negative electrode, capable of ensuring both excellent productivity and long-term reliability by simultaneously preventing manufacturing process defects, and mechanical property deterioration of a final electrode through an optimized negative electrode dam composition.

### Technical Solution

To solve the problem, according to one example of the present invention, a negative electrode is provided, which comprises: a negative electrode current collector; a negative electrode active material layer formed on one or both sides of the negative electrode current collector; and a negative electrode dam supporting both width-direction side edges of the negative electrode active material layer and formed by drying a negative electrode dam composition including inorganic particles, a cellulose-based compound, a rubber-based binder, and an additive, wherein contents of respective components of the negative electrode dam composition satisfy (a) to (d) below:
(a) 50 to 85 parts by weight of the inorganic particles,
(b) 0.5 to 15 parts by weight of the cellulose-based compound,
(c) 3 to 20 parts by weight of the rubber-based binder, and
(d) 5 to 12 parts by weight of the additive.

Also, in the negative electrode, the inorganic particles may comprise one or more selected from the group consisting of AlO(OH), Al₂O₃, γ-AlOOH, Al(OH)₃, SiO₂, TiO₂, SnO₂, CeO₂, MgO, NiO, CaO, ZnO, ZrO₂, Y₂O₃, SrTiO₃, BaTiO₃ and Mg(OH)₂.

Furthermore, in the negative electrode, the cellulose-based compound may comprise one or more selected from the group consisting of carboxymethylcellulose, a lithium salt of carboxymethylcellulose, and a sodium salt of carboxymethylcellulose.

In addition, in the negative electrode, the cellulose-based compound may have a weight average molecular weight (Mw) in a range of 100,000 to 600,000.

Also, in the negative electrode, the rubber-based binder may comprise one or more selected from the group consisting of styrene-butadiene rubber, acrylate styrene-butadiene rubber, acrylonitrile-butadiene rubber, and acrylonitrile-butadiene-styrene rubber.

Furthermore, in the negative electrode, the additive may comprise a porous additive and a carbon-based material.

In addition, in the negative electrode, the additive may comprise 0.1 to 0.6 parts by weight of the porous additive and 5 to 10 parts by weight of the carbon-based material.

Also, in the negative electrode according to another example, the negative electrode dam composition may have a solid content (%) in a range of 10 to 40%.

Furthermore, in the negative electrode, it may have a tensile strength of more than 3 kgf.

According to another example of the present invention, a negative electrode is provided, which comprises: a negative electrode current collector; a negative electrode active material layer formed on one or both sides of the negative electrode current collector; a negative electrode dam formed along edges of the negative electrode active material layer; and an overlap portion including a first component derived from the negative electrode active material layer and a second component derived from the negative electrode dam, wherein the first component has a content of 40 to 70 parts by weight and the second component has a content of 30 to 60 parts by weight.

According to another example of the present invention, a method for manufacturing a negative electrode is provided, which comprises steps of preparing a negative electrode slurry and a negative electrode dam composition, and co-coating the negative electrode slurry and the negative electrode dam composition on one or both sides of a negative electrode current collector, wherein the negative electrode dam composition comprises inorganic particles, a cellulose-based compound, a rubber-based binder, and an additive, and contents of respective components of the negative electrode dam composition satisfy (a) to (d) below:
(a) 50 to 85 parts by weight of the inorganic particles,
(b) 0.5 to 15 parts by weight of the cellulose-based compound,
(c) 3 to 20 parts by weight of the rubber-based binder, and
(d) 5 to 12 parts by weight of the additive.

Furthermore, in the method for manufacturing a negative electrode, the co-coating may be performed using a dual die coater.

In addition, in the method for manufacturing a negative electrode, the additive may comprise 0.1 to 0.6 parts by weight of a porous additive and 5 to 10 parts by weight of a carbon-based material.

### Advantageous Effects

The negative electrode and the method for manufacturing the negative electrode according to the present invention have an effect of ensuring both excellent productivity and long-term reliability by simultaneously preventing manufacturing process defects, and mechanical property deterioration of a final electrode through an optimized dam composition.

### Description of Drawings

Figure 1 is a partial cross-sectional diagram showing a negative electrode according to one example of the present invention.
Figure 2 is a diagram schematically showing an electrode manufacturing device performing a co-coating process according to one example of the present invention.
Figure 3 is a front view showing one example of a dual die coater which is usable as a coating device in the electrode manufacturing device of Figure 2.
Figure 4 is a front view showing another example of a dual die coater which is usable as a coating device in the electrode manufacturing device of Figure 2.

### Best Mode

The present invention relates to a negative electrode.

Hereinafter, a negative electrode according to one example of the present invention will be described in detail with reference to the attached drawings.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

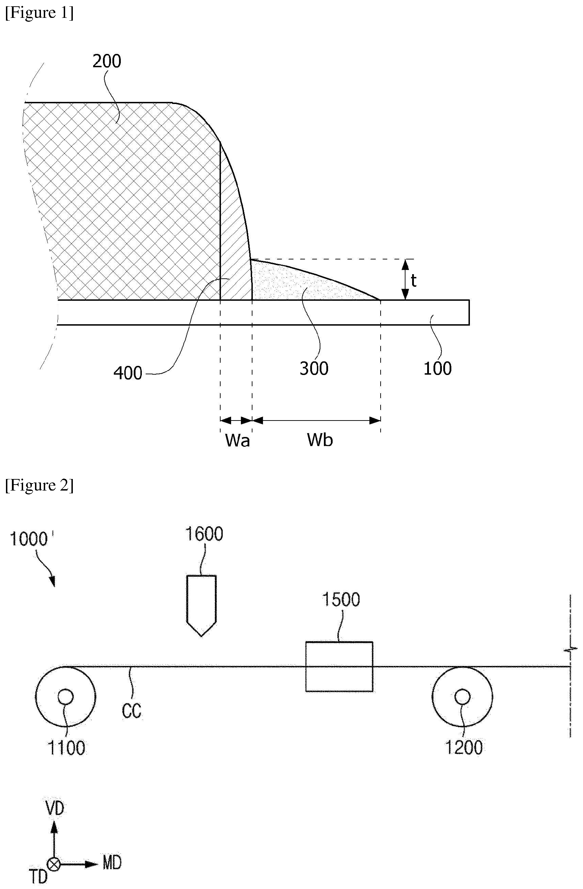

Figure 1 is a partial cross-sectional diagram showing a negative electrode according to one example of the present invention. For reference, Figure 1 exemplarily showed a negative electrode cross-section in which a negative electrode active material layer is arranged on one side of a negative electrode current collector.

Referring to the drawing, the negative electrode comprises a negative electrode current collector (100), a negative electrode active material layer (200) formed on one or both sides of the negative electrode current collector (100), and a negative electrode dam (300) supporting both width-direction side edges of the negative electrode active material layer (200) and formed by drying a negative electrode dam composition including inorganic particles, a cellulose-based compound, a binder, and an additive, wherein contents of respective components of the negative electrode dam composition satisfy (a) to (d) below:
(a) The inorganic particles may be in an amount of 50 to 85 parts by weight, specifically 55 to 80 parts by weight, 60 to 80 parts by weight, or 70 to 80 parts by weight.
(b) The cellulose-based compound may be in an amount of 0.5 to 15 parts by weight, specifically 1 to 10 parts by weight or 2 to 5 parts by weight.
(c) The rubber-based binder may be in an amount of 3 to 20 parts by weight, specifically 5 to 15 parts by weight or 9 to 14 parts by weight.
(d) The additive may be in an amount of 5 to 12 parts by weight, specifically 6 to 10 parts by weight or 7 to 9 parts by weight.

The present invention adjusts the contents of the respective components of the negative electrode dam composition within optimal ranges to promote organic interaction and balance among the respective component contents, thereby preventing mechanical property deterioration of the negative electrode active material layer while ensuring manufacturing process stability, which can ultimately provide a highly reliable negative electrode.

Hereinafter, roles of the respective components and the resulting effects will be described in detail.

### Inorganic Particles

The inorganic particles may serve to maintain a physical shape of a negative electrode dam (300) by forming a main framework thereof. Their content may be directly related to the mechanical reliability of the final electrode. If the content is too low, outside the scope of the present invention, the structure of the negative electrode dam (300) is weakened, whereby there may be a problem of electrode detachment after drying. Conversely, if the content is excessively high, unnecessary interaction with the negative electrode active material layer (200) is derived, whereby it may be a cause of decreasing the tensile strength of the negative electrode active material layer (200). The present invention can prevent such problems and implement a stable structure through the optimal content range.

### Rubber-Based Binder

The rubber-based binder may play a role in binding the constituent particles of the negative electrode dam (300) together and firmly adhering them to the negative electrode current collector (100). The binder content may be controlled within an optimal range, considering the trade-off relationship between securing adhesive force and maintaining processability.

If the content is too low, the interparticle binding force and the adhesive force with the current collector (100) are insufficient, whereby there may be a problem that the negative electrode dam (300) peels off from the final electrode. Conversely, if the content is excessive, the viscosity and adherence of the composition increase excessively, whereby it may be a cause of impairing processability, such as causing a solution agglomeration phenomenon.

Therefore, the present invention may control the content of the rubber-based binder within an optimal range, thereby ensuring firmly physical adhesive force and stable productivity simultaneously.

### Cellulose-Based Compound

The cellulose-based compound may play a role in ensuring processability by adjusting the viscosity and dispersion stability of the composition. If the content increases excessively, outside the optimal range, the viscosity of the composition may increase rapidly, thereby preventing the particles from being uniformly dispersed, and resulting in a solution agglomeration phenomenon. This may be a serious defect interfering with uniform coating of the negative electrode dam (300), so that it may be important to control the content within the range of the present invention.

### Additives

The additives may play a key role in simultaneously resolving problems of the trade-off relationship which ensures the mechanical reliability of the final negative electrode and maintains manufacturing processability.

Specifically, the additives may precisely control rheological properties and interfacial stability of the composition, thereby having a decisive effect on ensuring the tensile strength of the electrode after drying and imparting the structural stability thereto, while suppressing process defects such as the sliding phenomenon and the fat-edges.

Therefore, the present invention can achieve both excellent processability and high mechanical reliability by controlling the types and contents of additives within optimal ranges.

In one example, the inorganic particles may comprise one or more selected from the group consisting of AlO(OH), Al₂O₃, γ-AlOOH, Al(OH)₃, SiO₂, TiO₂, SnO₂, CeO₂, MgO, NiO, CaO, ZnO, ZrO₂, Y₂O₃, SrTiO₃, BaTiO₃ and Mg(OH)₂, and may be one or more selected from the group consisting of AlO(OH), Al₂O₃, γ-AlOOH and Al(OH)₃. For example, the inorganic particles may comprise AlO(OH) (hereinafter, also referred to as boehmite).

The average particle diameter (D50) of these inorganic particles may be an important factor in simultaneously ensuring the uniform coating properties of the composition and the structural stability of the dam formed after drying. The average particle diameter (D50) of the inorganic particles may be 0.1µm to 100µm, and more specifically, may be within the range of 0.5µm to 80µm, 1µm to 50µm, 2µm to 30µm, 3µm to 20µm, 5µm to 10µm, 0.3µm to 15µm, or 0.3µm to 10µm. If the particle diameter is too small, the dispersion stability of the composition may be reduced due to interparticle agglomeration, and conversely, if the particle diameter is too large, a uniformity degree of the coating surface may be impaired and micro-cracks may be caused. Therefore, by having a particle diameter within the above range, uniform coating may be enabled and local stress concentration may be prevented, thereby enhancing the mechanical reliability of the final electrode.

In this specification, the average particle diameter (D50) may be defined as a particle diameter based on 50% of the particle diameter distribution. The average particle diameter is not particularly limited, but may be measured using, for example, a laser diffraction method or a scanning electron microscope (SEM) photograph. The laser diffraction method may generally allow for measurement of particle diameters ranging from a submicron domain to several millimeters or so, and yield results with high reproducibility and high resolvability.

Furthermore, the cellulose-based compound may comprise one or more selected from the group consisting of carboxymethyl cellulose, a lithium salt of carboxymethyl cellulose, and a sodium salt of carboxymethyl cellulose. More specifically, the cellulose-based compound may comprise carboxymethyl cellulose (CMC).

The cellulose-based compound is a thickener effectively controlling the viscosity and rheological properties of the composition even in a small amount, which can play a key role in controlling the trade-off relationship between the sliding phenomenon and the fat-edge occurrence. Specifically, the cellulose-based compound can prevent the shape after coating from collapsing or spreading, and simultaneously, can effectively suppress the fat-edge phenomenon caused due to the tension difference between two liquid interfaces by controlling surface tension of the composition to a level like that of the negative active material slurry.

To implement these precise rheological properties, the cellulose-based compound may have a weight-average molecular weight (Mw) in a range of 100,000 to 600,000. The weight-average molecular weight may be directly related to a thickening efficiency. For example, if the weight-average molecular weight is too low, it may not provide sufficient viscosity, thereby making it difficult to prevent sliding, and conversely, if the weight-average molecular weight is too high, processability may be lowered or compatibility with other particles may be deteriorated due to excessive viscosity. Therefore, the weight-average molecular weight range may be a range optimized for preventing process defects through effective viscosity and surface tension control.

In this specification, the "weight-average molecular weight (Mw)" means a conversion value for standard polystyrene measured by gel permeation chromatography (GPC). Specifically, the weight-average molecular weight is a value obtained by converting a value measured using GPC under the following conditions, where Agilent standard polystyrene has been used to prepare a calibration curve.

### <Measurement Conditions>

Measuring Instrument: Agilent GPC (Agulent 1200 series, USA)
Column: 2 PL Mixed B columns connected
Column Temperature: 40°C
Eluent: Tetrahydrofuran
Flow Rate: 1.0 mL/min
Concentration: ~1 mg/mL (100 µL injection)

The negative electrode dam composition may comprise a solvent as a medium for uniformly dispersing the above-described components.

As the solvent, an organic solvent, such as dimethyl sulfoxide (DMSO) or N-methylpyrrolidone (NMP), or an aqueous solvent, such as water, may be used alone or in a mixture of two or more. Among these, water may be particularly preferred as the solvent for the negative electrode dam composition. This may be because as water's inherently high surface tension positively contributes to controlling the surface tension of the entire dam composition, it is advantageous to suppress the fat-edge phenomenon. Furthermore, the use of the aqueous solvent may also have an advantage of enabling an environmentally friendly and cost-effective process.

In one specific example, the rubber-based binder may comprise one or more selected from the group consisting of styrene-butadiene rubber, acrylate styrene-butadiene rubber, acrylonitrile-butadiene rubber, and acrylonitrile-butadiene-styrene rubber, and more specifically, may comprise styrene-butadiene rubber. Particularly, the styrene-butadiene rubber has excellent adhesive force to the copper-based negative electrode current collector (100), whereby it is possible to effectively suppress a lifting or peeling phenomenon of the negative electrode dam (300). Furthermore, the styrene-butadiene rubber has high flexibility and elasticity, whereby it is possible to prevent cracking or damage to the negative electrode dam (300) by effectively accommodating and buffering volume changes of the negative electrode active material layer (200) occurring upon charging and discharging. Through these properties, the styrene-butadiene rubber can contribute essentially to ensuring the long-term structural stability of the electrode.

The additive may comprise a porous additive and a carbon-based material. For example, the additive may comprise 0.1 to 0.6 parts by weight or 0.1 to 0.5 parts by weight of the porous additive and 5 to 10 parts by weight or 7 to 10 parts by weight of the carbon-based material.

The additive secures the mechanical properties (tensile strength) of the final electrode and simultaneously suppresses process defects such as sliding and fat-edges by comprising the porous additive and the carbon-based material within specific content ranges, whereby it is possible to improve both structural reliability and production stability, which have been in the trade-off relationship with each other.

The porous additive can play a role in suppressing the sliding phenomenon and precisely controlling the shape of the negative electrode dam (300) by primarily controlling the rheological properties of the composition.

Specifically, the porous additive may be activated carbon with a large specific surface area. The rubber-based binder is essential for securing adhesive force, but when the effect thereof is excessive, it may rather cause an adverse impact, such as induction of the sliding phenomenon, on processability. In this instance, the activated carbon can adsorb some of the binder component through its large surface area and pores, thereby playing a role in controlling and mitigating the excessive effects of the binder.

Through such interactions, the composition can possess viscoelasticity and surface tension optimized for sliding inhibition, which can decisively contribute to preventing the liquid dam slurry from spreading and maintaining a near-vertical shape.

To maximize such an effect, the porous additive may be activated carbon with a specific surface area (BET) in a range of 700 to 3,000 m²/g. The specific surface area may be measured using a BEF (Brunauer-Emmett-Teller) method. For example, it may be measured with a BET 6-point method by a nitrogen gas adsorption flow method using a stomatal distribution measuring instrument (porosimetry analyzer; Bell Japan Inc., Belsorp-II mini).

The carbon-based material can play a key role in ensuring the structural stability of the final electrode.

The carbon-based material may comprise one or more selected from carbon black, graphite, carbon nanotubes, and carbon nanofibers, and more specifically, may comprise carbon black. For example, the graphite may be artificial graphite, natural graphite, or the like, and the carbon black may be acetylene black, Ketjen black, furnace black, channel black, lamp black, thermal black, or the like.

The carbon-based material can play a key role in ensuring the interfacial stability of the negative electrode active material layer (200) and the negative electrode dam (300). For example, when the inorganic particles (e.g., boehmite) have a high content, they may be mixed with the negative electrode active material layer (200), thereby reducing the structural stability (e.g., tensile strength) of the negative electrode active material layer (200). The carbon-based material, such as carbon black, is positioned at the interface between the negative electrode dam (300) and the negative electrode active material layer (200) to act as a physical and electrochemical barrier, whereby it is possible to effectively prevent such a mixing phenomenon. Consequently, this can contribute to resolving the electrode peeling problem by preserving the tensile strength of the negative electrode active material layer.

In order that the negative electrode dam composition satisfies both goals with the trade-off relationship of stable dam shape maintenance and excellent production processability, the viscosity may be precisely controlled. For example, the viscosity measured under conditions of a temperature of 25°C and a shear rate of 1 s¹ may be in a range of 1,000 to 15,000 cP.

The viscosity may be a physical property directly related to shape retention force of the negative electrode dam (300). If the viscosity is too low as less than 1,000 cP, the composition spreads out without overcoming its own weight or a lateral pressure of the negative electrode slurry, whereby it may be difficult to suppress the sliding phenomenon. Conversely, if the viscosity is excessively high as more than 15,000 cP, It is difficult for the composition to pass through a discharge nozzle of a coating facility, such as a double slot die, whereby there may be a problem of lowering productivity.

Therefore, the present invention can achieve both stable negative electrode dam (300) formation and excellent processability by controlling the viscosity within the above range, more specifically, a range of 2,000 to 9,000 cP.

The solid content (%) of the negative electrode dam composition may be a critical factor in determining an efficiency of a drying process and a completion degree of the final dam structure. The solid content (%) may be in a range of 10% to 40%.

The solid content means a ratio of the actual active ingredients in the composition, excluding the solvent. If the solid content is too low as less than 10%, the negative electrode dam (300) is shrunk significantly after drying, as well as a significant amount of energy is required to evaporate the excess solvent, whereby it may be difficult to secure a sufficient thickness and a stable structure. On the other hand, if the solid content is too high as more than 40%, the viscosity rapidly increases, whereby it may harm the stability of the coating process.

Therefore, the present invention controls the solid content within the above range, more specifically, within the range of 20% to 35%, whereby it is possible to implement an efficient drying process and a negative electrode dam (300) with an ultimately excellent structure.

In another example, it may have a tensile strength of more than 3 kgf. The tensile strength may be a mechanical property ensuring long-term reliability of a battery. This is because it is a crucial indicator showing whether the negative electrode dam (300) can physically withstand the expansion and contraction stress of the negative electrode active material layer (200) occurring as charging and discharging are repeated. If the tensile strength is insufficient as 3 kgf or less, the negative electrode dam (300) may have microcracks or be broken without withstanding this mechanical stress. This soon leads to an electrode delamination phenomenon, whereby it can be a fatal cause of reduced battery lifespan.

Therefore, the present invention secures an excellent tensile strength exceeding 3 kgf, whereby it is possible to ensure the structural stability of the electrode and to dramatically improve long-term life characteristics.

The tensile strength may be measured using the following method.

First, the negative electrode to be evaluated is cut to a standard size to prepare a rectangular specimen. In this instance, the specimen is processed to have a consistent cross-sectional area and any foreign matter on the surface is removed.

The prepared specimen is mounted on a universal testing machine (UTM) and a tensile load is applied at a constant rate (e.g., 10 ± 1 mm/min) to measure the maximum load (Fmax) until the specimen breaks. The measurement is performed under constant temperature and humidity conditions (e.g., 23 ± 2°C, 50 ± 5% RH).

Finally, the tensile strength (σ) value is calculated by dividing the measured maximum load (Fmax) by the specimen's initial cross-sectional area (A) (σ = Fmax / A).

The present invention can ensure long-term structural reliability of the electrode as the tensile strength measured in this manner exceeds 3 kgf.

Hereinafter, the respective components of the negative electrode will be described in detail.

### Negative Electrode Current Collector

The negative electrode current collector (100) can serve as a passage for collecting electrons from the negative electrode active material and transferring them to an external circuit, and a substrate physically supporting the negative electrode active material layer (200).

Therefore, as the negative electrode current collector (100), a material being nonreactive within the voltage range of the battery while having high electrical conductivity may be used without any special limitation. Specifically, copper, stainless steel, aluminum, nickel, titanium, calcined carbon, and the like may be used, and stainless steel or an aluminum-cadmium alloy surface-treated with carbon, nickel, titanium, or silver, and the like may also be used as needed.

Furthermore, by forming fine irregularities on the surface of the negative electrode current collector (100), it is possible to enhance bonding force with the negative electrode active material, wherein as the form, various forms, such as a film, sheet, foil, net, porous body, foam, or non-woven fabric, may be used. The negative electrode current collector (100) may typically have a range of about 3µm to about 500µm.

### Negative electrode active material layer

The negative electrode active material layer (200) is a primary electrochemical reaction region where lithium-ion intercalation and deintercalation occur, which may be typically formed through a coating process of applying a negative electrode slurry to one or both sides of a negative electrode current collector (100) and drying it.

The negative electrode slurry may be prepared by mixing a negative electrode active material, a binder for bonding between particles and with the current collector, and, if necessary, a conductive material to enhance conductivity or a filler to suppress electrode expansion, and the like in a solvent, and stirring them.

As the solvent used here, dimethyl sulfoxide (DMSO), isopropyl alcohol, N-methylpyrrolidone (NMP), acetone, or water, and the like may be used alone or in a mixture of two or more. The solvent content may be adjusted to have a viscosity appropriate for a coating method to be used, considering the slurry's applicability and processability.

As the negative electrode active material, a compound capable of reversible intercalation and deintercalation of lithium may be used. A specific example may include a carbonaceous material such as artificial graphite, natural graphite, graphitized carbon fiber, and amorphous carbon; a metallic compound capable of alloying with lithium, such as Si, Al, Sn, Pb, Zn, Bi, In, Mg, Ga, Cd, Si alloys, Sn alloys, and Al alloys; a metal oxide capable of doping and de-doping lithium, such as SiOβ (0 < β < 2), SnO₂, vanadium oxide, and lithium vanadium oxide; or composites comprising the metallic compound and carbonaceous material, such as Si-C composites or Sn-C composites, and the like, and any one or a mixture of two or more of the foregoing may be used. A metal lithium thin film may also be used as the negative electrode active material.

Specifically, all low-crystalline carbon and high-crystalline carbon, and the like may be used as the carbonaceous material. The low-crystalline carbon may representatively include soft carbon and hard carbon, and as the high-crystalline carbon, natural graphite, artificial graphite, Kish graphite, pyrolytic carbon, mesophase pitch-based carbon fiber, mesocarbon microbeads, mesophase pitches, and calcined carbon such as petroleum or coal tar pitch-derived cokes may be used, and specifically, it is more preferable in that a graphite-based negative electrode active material, such as natural graphite or artificial graphite, enables reversible lithium-ion intercalation and deintercalation while maintaining structural and electrical properties.

The negative electrode active material may be included in a range of about 80 wt% to 99.5 wt% or in a range of 88 wt% to 99 wt% relative to the total weight of the negative electrode active material layer (200), but the content is not limited thereto.

The binder is not particularly limited as long as it is a component that assists in the bonding of the negative electrode active material and the conductive material and the bonding to the current collector, and may include, for example, polyvinylidene fluoride, polyvinyl alcohol, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, styrene butadiene rubber, fluororubber, various copolymers, and the like.

When the solvent of the negative electrode slurry is an aqueous solvent such as water, the binder is preferably an aqueous binder. In a specific example, the aqueous binder may comprise one or more selected from the group consisting of styrene-butadiene rubber, acrylate styrene-butadiene rubber, acrylonitrile-butadiene rubber, acrylonitrile-butadiene-styrene rubber, acrylic rubber, butyl rubber, fluoroelastomer, polytetrafluoroethylene, polyethylene, polypropylene, an ethylene propylene copolymer, polyethylene oxide, polyvinylpyrrolidone, polyepichlorohydrin, polyphosphazene, polyacrylonitrile, polystyrene, an ethylene propylene diene copolymer, polyvinylpyridine, chlorosulfonated polyethylene, latex, polyester resin, acrylic resin, phenol resin, epoxy resin, polyvinyl alcohol, hydroxypropylmethylcellulose, hydroxypropylcellulose, and diacetylcellulose.

In a specific example, the aqueous binder may comprise one or more selected from the group consisting of styrene-butadiene rubber, acrylate styrene-butadiene rubber, acrylonitrile-butadiene rubber, and acrylonitrile-butadiene-styrene rubber. For example, the aqueous binder may be styrene-butadiene rubber.

The binder may typically be included in an amount of 1 to 30 wt% based on the total weight of the negative electrode active material layer (200).

The conductive material is not particularly limited if it has conductivity without inducing any chemical change in the relevant battery, and for example, graphite such as natural graphite or artificial graphite; carbon black such as carbon black, acetylene black, Ketjen black, channel black, furnace black, lamp black, or thermal black; conductive fibers such as carbon fibers or metal fibers; conductive tubes such as carbon nanotubes; metal powders such as fluorocarbon, aluminum, or nickel powder; conductive whiskers such as zinc oxide or potassium titanate; conductive metal oxides such as titanium oxide; conductive materials such as polyphenylene derivatives, and the like may be used.

The conductive material may typically be included in an amount of 1 to 30 wt% based on the total weight of the negative electrode active material layer (200).

The filler is optionally used as a component that suppresses expansion of the electrode, and is not particularly limited if it is a fibrous material without inducing any chemical change in the relevant battery, and for example, olefinic polymers such as polyethylene or polypropylene; and fibrous materials such as glass fiber or carbon fiber may be used.

### Negative Electrode Dam

The negative electrode dam (300) may be formed by applying a negative electrode dam composition to one side of the negative electrode current collector (100) and drying it. In the present invention, the negative electrode active material layer (200) and the negative electrode dam (300) may be formed integrally through a co-coating process.

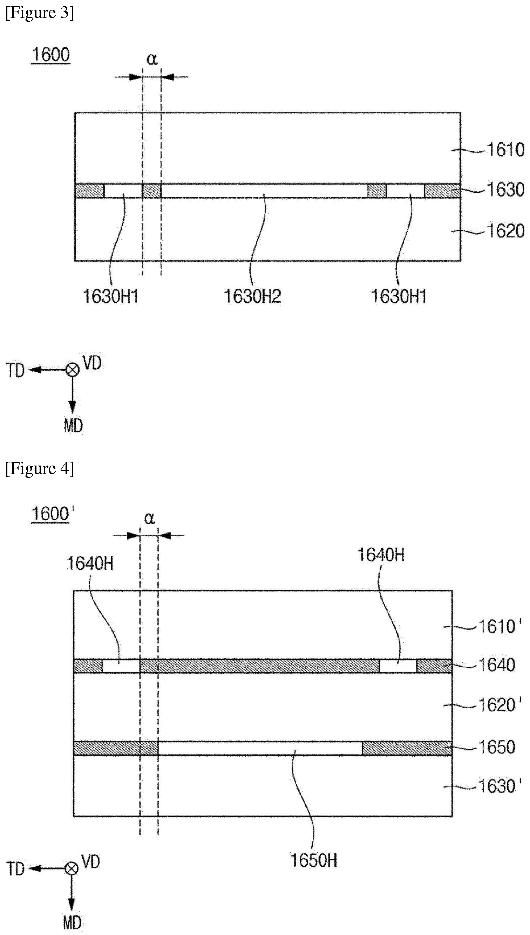

Figure 2 is a diagram schematically showing an electrode manufacturing device performing a co-coating process according to one example of the present invention, Figure 3 is a front view showing one example of a dual die coater which is usable as a coating device in the electrode manufacturing device of Figure 2, and Figure 4 is a front view showing another example of a dual die coater which is usable as a coating device in the electrode manufacturing device of Figure 2.

In the drawings, the electrode traveling direction has been indicated as the machine direction (MD), the width direction has been indicated as the transverse direction (TD), and the thickness direction has been indicated as the vertical direction (VD).

Referring to Figure 2, the electrode manufacturing device (1000') may be implemented as a roll-to-roll process, including a first roll (1100) for unwinding a current collector (cc), a second roll (1200) for winding the current collector (cc), a coating device (1600) for co-coating, and a drying device (1500) for evaporating a solvent.

The coating device (1600) may be a dual die coater, specific examples of which are illustrated in Figures 3 and 4.

Figure 3 illustrates a first example of the coating device (1600) in detail. Referring to Figure 3, the coating device (1600) may be composed of an upper die (1610), a lower die (1620), and one coating shim (1630) interposed therebetween. In this structure, a first discharge part (1630H1) for discharging a negative electrode dam composition and a second discharge part (1630H2) for discharging a negative electrode slurry may be formed together within one coating shim (1630).

Meanwhile, Figure 4 illustrates another example of a coating device (1600'). Unlike the example of Figure 3, Figure 4 may use two separate coating shims. Specifically, the coating device (1600') of Figure 4 may comprise an upper die (1610'), a middle die (1620'), and a lower die (1630'), and may also comprise an upper coating shim (1640) interposed between the upper die (1610') and the middle die (1620'), and a lower coating shim (1650) interposed between the middle die (1620') and the lower die (1630').

A negative electrode dam composition discharge part (1640H) and a negative electrode slurry discharge part (1650H) may be positioned at the upper coating shim (1640) and the lower coating shim (1650), respectively. Such a multi-shim structure may be advantageous in independently controlling the flow rates or pressures of the respective compositions.

In this way, the present invention may enable precise and uniform co-application of two liquid compositions onto a current collector (100) in a single process through various types of dual die coaters.

Such a co-coating method may be advantageous in forming a more robust and stable interface than forming two layers separately, together with an advantage of simplifying processes. For example, using a facility such as a dual die coater, the negative electrode slurry and the negative electrode dam composition may be co-applied onto the current collector (100) simultaneously and precisely, and dried together. As a result, the negative electrode dam (300) may be formed integrally on the same surface as the negative electrode active material layer

(200).

Detailed descriptions related to components of the negative electrode dam composition overlap with those as described above, so that the descriptions will be omitted.

### Overlap Portion

The overlap portion (400) may be formed while the liquid-phase negative electrode slurry and the negative electrode dam composition are naturally mixed at the contacting interface during the co-coating process as described above. Therefore, the overlap portion (400) may exist as a region with a composition gradient, where the component (first component) derived from the negative electrode active material layer (200) and the component (second component) derived from the negative electrode dam (300) are physically mixed.

The interface thus formed naturally may be much more effective in alleviating mechanical stress than an abrupt boundary as artificially formed. That is, the overlap portion (400) can contribute essentially to ensuring the structural stability of the electrode by acting as a buffer layer that gradually changes the physical and electrochemical properties between two regions with different physical properties.

Therefore, the present invention can optimize the structure and characteristics of the finally formed overlap portion (400) by precisely controlling the composition and various physical properties of the negative electrode dam composition, thereby implementing the desired effect.

In one example, the negative electrode according to the present invention may satisfy Equation 1 below:

$0.005 < Wa / Wb < 15$

In Equation 1, Wa is the width of the overlap portion (400), and Wb is the width of the negative electrode dam (300).

This ratio may be a key factor in controlling the balance between forming an ideal buffer layer between two regions made of heterogeneous materials and maintaining the dam's inherent support function.

For example, if there is almost no overlap portion (400) as the Wa/Wb ratio of 0.005 or less, two regions with different physical properties form a sharp boundary. This boundary may be a cause of stress concentration during the repeated expansion and contraction of the electrode upon battery charging and discharging. The concentrated stress ultimately leads to the delamination phenomenon of the electrode edges, whereby it can be a major factor that reduces the battery's lifespan and reliability. Therefore, the present invention can prevent this problem by securing an overlap portion (400) with a significant width.

Meanwhile, the reason that the Wa/Wb ratio must be controlled to less than 15.0 may be to ensure a structural support role, which is the inherent function of the negative electrode dam (300). If this ratio becomes excessively large as 15.0 or more, the pure negative electrode dam (300) region (Wb) becomes relatively narrow, whereby it may be difficult to fully perform a role as a physical support. This can cause structural collapse or deformation of the electrode, by failing to effectively suppress the sliding of the negative electrode slurry during the manufacturing process or failing to firmly support the edges of the active material layer upon charging and discharging.

In conclusion, the negative electrode of the present invention satisfies Equation 1 above, whereby it is possible to simultaneously prevent both an 'interfacial delamination' problem inhibiting the long-term reliability of the electrode and a 'structural collapse' problem due to dam malfunction, and it is possible to maximize the performance and durability of the battery.

In another example, the overlap portion (400) may have a width (Wa) within a range of 0.01 to 2.0 mm. When Wa is within the above range, the overlap portion (400) can perform an effective buffer role which gradually connects the physical and chemical characteristic differences between the negative electrode active material layer (200) and the negative electrode dam (300) made of heterogeneous materials. Through this, by ensuring interfacial adhesive force between the two regions and alleviating mechanical stress generated upon charging and discharging, it is possible to enhance structural stability.

When the Wa is too narrow as less than 0.01 mm, it does not sufficiently perform the buffer role, whereby the stress can be concentrated on the boundary, which resulting in stress concentration at the interface, which can lower the battery lifespan by ultimately leading to delamination.

Conversely, when the Wa is too wide as more than 2.0 mm, the overlap portion (400) encroaches on an effective area to be coated with the active material, whereby it is possible to cause a loss of battery capacity.

In one specific example, the Wb may be in a range of 0.1 to 3.0 mm. When the Wb is within this range, the negative electrode dam (300) can stably perform a role as a structural support for supporting the electrode edges and maintaining the shape of the electrode. When the Wb is too narrow as less than 0.1 mm, the structural support function of the negative electrode dam (300) is degraded, whereby it may be difficult to effectively suppress the sliding phenomenon. Conversely, when the Wb is too wide as more than 3.0 mm, this also reduces the effective area of the active material, whereby it is possible to cause a loss of battery capacity.

In one specific example, the negative electrode dam (300) may have a thickness (t) in a range of 5 to 200 µm, in a range of 10 to 150 µm, in a range of 10 to 100 µm, or in a range of 10 to 50 µm. The negative electrode dam (300) satisfying the thickness (t) can perform a stable function as a support structure. If the thickness of the negative electrode dam (300) is too thin, its physical support force may be insufficient, and if it is too thick, it may cause a step problem or a material cost increase upon battery assembly.

According to another example, the present invention relates to a negative electrode maximizing electrode reliability by optimizing a composition inside an overlap portion (400) where a negative electrode active material layer (200) and a negative electrode dam (300) meet. Hereinafter, detailed descriptions overlapping with the contents as described above will be omitted.

According to another example, the negative electrode comprises a negative electrode current collector (100), a negative electrode active material layer (200) formed on one or both sides of the negative electrode current collector (100), a negative electrode dam (300) formed along edges of the negative electrode active material layer (200), and an overlap portion (400) including a first component derived from the negative electrode active material layer (200) and a second component derived from the negative electrode dam (300), wherein the first component has a content of 40 to 70 parts by weight, and the second component has a content of 30 to 60 parts by weight.

Specifically, the content of the first component may be 45 to 65 parts by weight, and the content of the second component may be 35 to 55 parts by weight.

Such composition control may be intended to allow for the overlap portion (400) to optimally perform two roles, which are a mechanical buffering function and a smooth ion transfer function, with the trade-off relationship simultaneously.

If the first component exceeds 70 parts by weight and the second component is relatively low within the overlap portion (400), the properties of the overlap portion (400) become closer to those of the negative electrode active material layer (200), whereby it cannot effectively buffer the physical property difference with the negative electrode dam (300), and the mechanical stress relief effect can be insignificant.

Conversely, if the second component exceeds 60 parts by weight and the first component is too low, the electrical resistance of the overlap portion (400) increases, whereby it can be an electrochemically inactive region that impedes lithium-ion migration. This can be a cause of degrading the output and lifespan characteristics of the electrode.

Therefore, the present invention can achieve a dual effect of ensuring structural stability through mechanical stress relief and simultaneously ensuring a smooth ion transfer pathway to prevent electrochemical performance degradation, by controlling the composition of the overlap portion (400) within the specific range.

In one example, the first component may comprise a negative electrode active material, and the second component may comprise inorganic particles and an additive.

Also, the additive may comprise at least one of a porous additive, a carbon-based material, and a viscoelasticity-imparting agent.

In accordance with another example of the present invention, it relates to a method for manufacturing the above-described negative electrode. Detailed descriptions overlapping with the above-described contents will be omitted below.

The method for manufacturing the negative electrode according to the present invention comprises steps of preparing a negative electrode slurry and a negative electrode dam composition, and co-coating the negative electrode slurry and the negative electrode dam composition on one or both sides of a negative electrode current collector.

The negative electrode dam composition comprises inorganic particles, a cellulose-based compound, a rubber-based binder, and an additive. The contents of the respective components of the negative electrode dam composition satisfy the following (a) to (d):
(a) 50 to 85 parts by weight of the inorganic particles,
(b) 0.5 to 15 parts by weight of the cellulose-based compound,
(c) 3 to 20 parts by weight of the rubber-based binder, and
(d) 5 to 12 parts by weight of the additive.

The preparation step may comprise a step of preparing a negative electrode dam composition by mixing and stirring the respective components in a solvent to satisfy the contents of (a) to (d) above.

Furthermore, in the preparation step, a negative electrode slurry comprising a negative electrode active material, a binder, and the like may be prepared using a usual method.

The co-coating step may be performed using a facility such as a dual die coater (1600), as described above through Figures 2 to 4. Through this, allows the negative electrode slurry may be positioned at the center, and the negative electrode dam composition may be applied parallel to both side edges. Thereafter, the co-coated current collector is dried using a drying device (1500) or the like to remove the solvent, whereby it is possible to manufacture a final negative electrode in which the negative electrode active material layer (200) and the negative electrode dam (300) are integrally formed.

In one example, the additive may comprise 0.1 to 0.6 parts by weight of a porous additive and 5 to 10 parts by weight of a carbon-based material.

Hereinafter, the present invention will be described in more detail by way of examples. However, the following examples are intended to illustrate the present invention, and the scope of the present invention is not limited solely to these examples.

### Example 1

### Preparation of negative electrode dam composition

A negative electrode dam composition was prepared by mixing 75.9 parts by weight of boehmite (product name JD3M-A-02) as inorganic particles, 11.2 parts by weight of styrene-butadiene rubber (SBR, product name M37) as a rubber-based binder, 4.7 parts by weight of CMC (product name BH230) as a cellulose-based compound, and 0.2 parts by weight of activated carbon and 8.0 parts by weight of carbon black as an additive in water, and stirring them.

At this time, the final composition had a solid content of 20%, and its viscosity (at 25°C, 1 s⁻¹) was measured at 4820cps.

### Preparation of negative electrode slurry

A negative electrode slurry was prepared by mixing artificial graphite as a negative electrode active material, styrene butadiene rubber (SBR) as a binder, carboxymethyl cellulose (CMC) as a thickener, and carbon nanotubes as a conductive material in water at a weight ratio of 95:2:1.5:1.5, and stirring them.

### Production of negative electrode

The negative electrode slurry and the negative electrode dam composition as prepared above were co-coated onto a 10µm-thick copper foil current collector using a dual die coater. At this time, the negative electrode dam composition was applied to be positioned at both side edges of the region where the negative electrode slurry was applied. Thereafter, it was dried at 90°C and rolled to produce a negative electrode of Example 1.

### Example 2

### Preparation of negative electrode dam composition

A negative electrode dam composition was prepared by mixing 74.9 parts by weight of boehmite (product name JD3M-A-02) as inorganic particles, 13.0 parts by weight of styrene-butadiene rubber (SBR, product name M37) as a rubber-based binder, 4.0 parts by weight of CMC (product name BH230) as a cellulose-based compound, and 0.1 parts by weight of activated carbon and 8.0 parts by weight of carbon black as an additive in water, and stirring them. At this time, the final composition had a solid content of 20%, and its viscosity (at 25°C, 1 s⁻¹) was measured at 4840cps.

### Preparation of negative electrode slurry

A negative electrode slurry was prepared by mixing artificial graphite as a negative electrode active material, styrene butadiene rubber (SBR) as a binder, carboxymethyl cellulose (CMC) as a thickener, and carbon nanotubes as a conductive material in water at a weight ratio of 95:2:1.5:1.5.

### Production of negative electrode

The negative electrode slurry and the negative electrode dam composition as prepared above were co-coated onto a 10µm-thick copper foil current collector using a dual die coater. The negative electrode dam composition was applied to both side edges of the region where the negative electrode slurry was applied. Thereafter, it was dried at 90°C and rolled to produce a negative electrode of Example 2.

### Comparative Example 1

### Preparation of negative electrode dam composition

A negative electrode dam composition was prepared using the same method as in Example 1, except for using 49.5 parts by weight of boehmite (JD3M-A-02) as inorganic particles, 40 parts by weight of styrene-butadiene rubber (SBR, M37) as a rubber-based binder, 10 parts by weight of CMC (BH230) as a cellulose-based compound, and 0.5 parts by weight of activated carbon as an additive (carbon black not included). At this time, the final composition had a solid content of 11%, and its viscosity was measured at 5,300cps.

### Preparation of negative electrode slurry and negative electrode

The preparation of the negative electrode slurry and the preparation of the negative electrode using the same were performed in the same method as in Example 1.

### Comparative Example 2

### Preparation of negative electrode dam composition

A negative electrode dam composition was prepared using the same method as in Example 1, except for using 87.5 parts by weight of boehmite (JD3M-A-02) as inorganic particles, 8 parts by weight of styrene-butadiene rubber (SBR, M37) as a rubber-based binder, 4 parts by weight of CMC (BH230) as a cellulose-based compound, and 0.5 parts by weight of activated carbon as an additive (carbon black not included). At this time, the final composition had a solid content of 23%, and its viscosity was measured at 3050cps.

### Preparation of negative electrode slurry and negative electrode

The preparation of the negative electrode slurry and the preparation of the negative electrode using the same were performed in the same method as in Example 1.

### Comparative Example 3

### Preparation of negative electrode dam composition

A negative electrode dam composition was prepared using the same method as in Example 1, except for using 82.5 parts by weight of boehmite (product name JD3M-A-02) as inorganic particles and 17.5 parts by weight of CMC (product name BH230) as a cellulose compound (no binder and additive included). At this time, the final composition had a solid content of 25%, and its viscosity was measured at 4,000cps.

### Preparation of negative electrode slurry and negative electrode

The preparation of the negative electrode slurry and the preparation of the negative electrode using the same were performed in the same method as in Example 1.

### Comparative Example 4

### Preparation of negative electrode dam composition

A negative electrode dam composition was prepared using the same method as in Example 1, except for using 80.8 parts by weight of boehmite (product name: JD3M-A-02) as inorganic particle, 9.6 parts by weight of styrene-butadiene rubber (SBR, product name: M37) as a rubber-based binder, 5.4 parts by weight of CMC (product name: BH230) as a cellulose-based compound, and 0.2 parts by weight of activated carbon and 4.0 parts by weight of carbon black as an additive. At this time, the final composition had a solid content of 20%, and its viscosity was measured at 5080cps.

### Preparation of negative electrode slurry and negative electrode

The preparation of the negative electrode slurry and the preparation of the negative electrode using the same were performed in the same method as in Example 1.

### Comparative Example 5

### Preparation of negative electrode dam composition

A negative electrode dam composition was prepared using the same method as in Example 1, except for using 70.3 parts by weight of boehmite (JD3M-A-02) as inorganic particles, 13 parts by weight of styrene-butadiene rubber (SBR, M37) as a rubber-based binder, 4 parts by weight of CMC (BH230) as a cellulose-based compound, and 0.2 parts by weight of activated carbon and 12.5 parts by weight of carbon black as and additive. At this time, the final composition had a solid content of 20%, and its viscosity was measured at 4300cps.

Preparation of negative electrode slurry and preparation of negative electrode: The preparation of the negative electrode slurry and the production of the negative electrode using the same were performed in the same method as in Example 1.

### Comparative Example 6

### Preparation of negative electrode dam composition

A negative electrode dam composition was prepared using the same method as in Example 1, except for using 70 parts by weight of boehmite (JD3M-A-02) as inorganic particles, 13 parts by weight of styrene-butadiene rubber (SBR, M37) as a rubber-based binder, 4 parts by weight of CMC (BH230) as a cellulose-based compound, and 13 parts by weight of carbon black as an additive (activated carbon not included). At this time, the final composition had a solid content of 20%, and its viscosity was measured at 4,580cps.

### Preparation of negative electrode slurry and negative electrode

The preparation of the negative electrode slurry and the preparation of the negative electrode using the same were performed in the same method as in Example 1.

### Experimental Example - Evaluation of negative electrode physical properties

To confirm the effectiveness of the present invention, the main properties of each negative electrode manufactured in Examples 1 and 2 and Comparative Examples 1 to 6 were evaluated, and the results are shown in Table 1 below. Tensile strength was measured according to the measurement method described above.

**[Table 1]**

| | Wa/Wb | Tensile strength (kgf) | Evaluation results |
|---|---|---|---|
| Example 1 | 0.7 | 4 | No problem |
| Example 2 | 0.7 | 3.9 | No problem |
| Comparative Example 1 | 0.7 | 2.7 | Electrode delamination |
| Comparative Example 2 | 0.7 | 0 | Low tensile strength |
| Comparative Example 3 | - | - | Solution agglomeration |
| Comparative Example 4 | 6.7 | 3 | Low tensile strength |
| Comparative Example 5 | 0.7 | 3.3 | Excessive verticalization |
| Comparative Example 6 | 20 | 3.6 | Verticalization failure |

As can be seen from the results in Table 1, only for Examples 1 and 2, which had the optimal composition according to the claims of the present invention, stable negative electrodes were manufactured without any special issues.

Specifically, Examples 1 and 2 showed excellent tensile strength values of 4.0 kgf and 3.9 kgf, respectively.

Conversely, Comparative Examples 1 and 2 are cases where inorganic particle (boehmite) contents are outside the optimal range. Comparative Example 1, with its excessively low content, exhibited a tensile strength of only 2.7 kgf, ultimately resulting in electrode delamination, and Comparative Example 2, with its excessively high content, had the measured tensile strength of 0 kgf due to excessive mixing with the active material layer, whereby structural stability was completely lost.

Comparative Example 3 had an excessive cellulose-based compound (CMC) content, thereby resulting in the solution agglomeration phenomenon, whereby uniform coating itself was impossible.

Comparative Examples 4 and 5 are cases where carbon-based material (carbon black) contents are outside the optimal range. Comparative Example 4, with its excessively low content, had a tensile strength of only 3.0 kgf, thereby resulting in poor mechanical properties. On the other hand, Comparative Example 5, with its excessively high content, had a tensile strength of 3.3 kgf, which exceeded the standard, and nevertheless, processing defects due to excessive verticalization known as 'fat-edge' occurred

Finally, Comparative Example 6 was a case where no porous additive (activated carbon) existed, which had a high tensile strength of 3.6 kgf, but there was a problem of 'verticalization failure (sliding)', whereby the inherent function of the dam was not performed.

In conclusion, it was confirmed that by organically controlling the respective component contents of the negative electrode dam composition within the specific ranges, the present invention could secure excellent mechanical properties exceeding 3 kgf and simultaneously suppress processing defects and structural defects, thereby simultaneously resolving various problems with the trade-off relationship to provide a highly reliable negative electrode.

The preferred examples of the present invention as described above have been disclosed for illustrative purposes, and those skilled in the art having ordinary knowledge of the present invention will be able to make various modifications, changes, and additions within the spirit and scope of the present invention, and such modifications, changes, and additions should be regarded as falling within the scope of the following claims.

### Explanation of Reference Numerals

100: Negative electrode current collector
200: Negative electrode active material layer
300: Negative electrode dam
400: Overlap portion

## Claims

1. A negative electrode comprising:
a negative electrode current collector;
a negative electrode active material layer formed on one or both sides of the negative electrode current collector; and
a negative electrode dam supporting both width-direction side edges of the negative electrode active material layer and formed by drying a negative electrode dam composition including inorganic particles, a cellulose-based compound, a rubber-based binder, and an additive, wherein
contents of respective components of the negative electrode dam composition satisfy (a) to (d) below:
(a) 50 to 85 parts by weight of the inorganic particles,
(b) 0.5 to 15 parts by weight of the cellulose-based compound,
(c) 3 to 20 parts by weight of the rubber-based binder, and
(d) 5 to 12 parts by weight of the additive.

2. The negative electrode according to claim 1, wherein the inorganic particles comprise one or more selected from the group consisting of AlO(OH), Al₂O₃, γ-AlOOH, Al(OH)₃, SiO₂, TiO₂, SnO₂, CeO₂, MgO, NiO, CaO, ZnO, ZrO₂, Y₂O₃, SrTiO₃, BaTiO₃ and Mg(OH)₂.

3. The negative electrode according to claim 1, wherein the cellulose-based compound comprises one or more selected from the group consisting of carboxymethylcellulose, a lithium salt of carboxymethylcellulose, and a sodium salt of carboxymethylcellulose.

4. The negative electrode according to claim 1, wherein the cellulose-based compound has a weight average molecular weight (Mw) in a range of 100,000 to 600,000.

5. The negative electrode according to claim 1, wherein the rubber-based binder comprises one or more selected from the group consisting of styrene-butadiene rubber, acrylate styrene-butadiene rubber, acrylonitrile-butadiene rubber, and acrylonitrile-butadiene-styrene rubber.

6. The negative electrode according to claim 1, wherein the additive comprises a porous additive and a carbon-based material.

7. The negative electrode according to claim 6, wherein the additive comprises 0.1 to 0.6 parts by weight of the porous additive and 5 to 10 parts by weight of the carbon-based material.

8. The negative electrode according to claim 6, wherein the carbon-based material comprises one or more selected from carbon black, graphite, carbon nanotubes, and carbon nanofibers.

9. The negative electrode according to claim 1, wherein the negative electrode dam composition has a solid content (%) in a range of 10 to 40%.

10. The negative electrode according to claim 1, having a tensile strength of more than 3 kgf.

11. A negative electrode comprising:
a negative electrode current collector;
a negative electrode active material layer formed on one or both sides of the negative electrode current collector;
a negative electrode dam formed along edges of the negative electrode active material layer; and
an overlap portion including a first component derived from the negative electrode active material layer and a second component derived from the negative electrode dam, wherein
the first component has a content of 40 to 70 parts by weight and
the second component has a content of 30 to 60 parts by weight.

12. A method for manufacturing a negative electrode comprising steps of:
preparing a negative electrode slurry and a negative electrode dam composition; and
co-coating the negative electrode slurry and the negative electrode dam composition on one or both sides of a negative electrode current collector, wherein
the negative electrode dam composition comprises inorganic particles, a cellulose-based compound, a rubber-based binder, and an additive, and
contents of respective components of the negative electrode dam composition satisfy (a) to (d) below:
(a) 50 to 85 parts by weight of the inorganic particles,
(b) 0.5 to 15 parts by weight of the cellulose-based compound,
(c) 3 to 20 parts by weight of the rubber-based binder, and
(d) 5 to 12 parts by weight of the additive.

13. The method for manufacturing a negative electrode according to claim 12, wherein the co-coating is performed using a dual die coater.

14. The method for manufacturing a negative electrode according to claim 12, wherein the additive comprises 0.1 to 0.6 parts by weight of a porous additive and 5 to 10 parts by weight of a carbon-based material.
